# EUROPÄISCHE PATENTSCHRIFT

(11) **EP 1 559 305 B1**
(45) Veröffentlichungstag und Bekanntmachung des Hinweises auf die Patenterteilung: **12.03.2008**
(21) Anmeldenummer: 05000431.6
(22) Anmeldetag: 11.01.2005
(51) Int. Cl.: A01C 17/00

(54) **Zweischeibenstreuer zum Verteilen von Streugut, insbesondere Dünger**
Two-discs-spreader for distributing granular material, especially fertilizer
Distributeur centrifuge à deux disques pour distribution des matériaux granulaires, en particulier engrais

(30) Priorität: 30.01.2004 DE 102004004711
(43) Veröffentlichungstag der Anmeldung: 03.08.2005
(73) Patentinhaber: RAUCH LANDMASCHINENFABRIK GMBH, D-76547 Sinzheim (DE)
(72) Erfinder: Rauch, Norbert, 76547 Sinzheim (DE); Weisser, Thomas, 77815 Bühl (DE); Doll, Franz, 76547 Sinzheim (DE); Gushurst, Hans, 76547 Sinzheim (DE)
(74) Vertreter: Lichti, Heiner

(56) Entgegenhaltungen:
- EP-A- 0 138 127
- DE-A1- 2 804 253
- DE-A1- 3 643 854
- DE-A1- 4 101 681
- DE-U1- 8 632 954

## Beschreibung

Die Erfindung betrifft einen Zweischeibenstreuer zum Verteilen von Streugut, insbesondere Dünger, mit einem Streugut-Behälter mit zwei trichterförmig zu je einem Boden verlaufenden Unterteilen, mindestens je einer Auslauföffnung in jedem Boden, je einem Rührwerk im Behälter oberhalb jedes Bodens und einer unter jedem Boden angeordneten Wurfscheibe mit einem Antrieb, wobei die Rührwerke über einen etwa von der Mitte zwischen den Wurfscheiben ausgehenden Antriebsstrang mit einer geringeren Drehzahl als die Wurfscheiben angetrieben sind.

Bei Streuern, insbesondere Düngerstreuern ist das Rührwerk ein wesentliches Funktionsorgan, das für einen gleichmäßigen Zulauf des Düngers aus dem Behälter zu den Auslauföffnungen und den unmittelbar darunter angeordneten Dosiervorrichtungen sorgen muss, und zwar über den gesamten Dosierbereich zwischen einer maximalen und einer minimalen Dosiermenge, die von der Streumenge (kg/ha), der Fahrgeschwindigkeit (km/h) und der Arbeitsbreite (m) abhängig ist. Das Rührwerk hat ferner dafür zu sorgen, dass sich der Dünger nicht in Toträumen des Behälters aufstaut und ansammelt, um auf diese Weise eine möglichst vollständige Restentleerung des Behälters zu gewährleisten. Das Rührwerk muss - im Gegensatz zu den Wurfscheiben - mit einer niedrigeren Drehzahl umlaufen, um das Düngergranulat nicht zu zerkleinern und einen unerwünschten Abrieb zu vermeiden. Schließlich muss das Rührwerk an die Bodenform angepasst und auf die Einstellmöglichkeiten der Dosiervorrichtung und des Aufgabepunktes abgestimmt sein.

Bei einer bekannten Bauart (DE 33 37 813 A1, DE 36 37 045 A1, DE 36 43 854 A1) wird das Rührwerk von der Antriebswelle der Wurfscheibe angetrieben, die zu diesem Zweck den Raum zwischen der Wurfscheibe und dem Boden des Streugut-Behälters durchgreift und im Boden des Behälters gelagert ist. Das Rührwerk läuft folglich mit derselben Drehzahl um wie die Wurfscheibe, was zu einer unnötig starken Umwälzbewegung des Düngers oberhalb des Bodens und insbesondere zur Beschädigung und Zerstörung des Düngergranulats führt. Ferner ist bei dieser Bauart von Nachteil, dass der Raum unterhalb des Bodens des Behälters für eine Abdrehprobe nur sehr schwer zugänglich ist. Schließlich ist der Ausbau und Austausch der Wurfscheiben nur mit erheblichem Aufwand möglich.

Diese Nachteile werden bei einer anderen bekannten Bauart (EP 0 540 889 A1), die zugleich den Oberbegriff des Anspruchs 1 bildet, dadurch behoben, dass die Rührwerke im Behälter "hängend" angeordnet sind und von einem Antriebsstrang angetrieben werden, der etwa in der Mitte von dem querliegenden Getriebe für den Antrieb der Wurfscheiben abgeleitet ist. Hierzu dient ein von der Querwelle des Getriebes nach oben geführter Kettentrieb, der über je eine nach beiden Seiten in die trichterförmigen Unterteile des Behälters eingreifende horizontale Welle und je ein an deren Enden angeordnetes Winkelgetriebe die vertikalen Rührwerkswellen antreibt. Die Rührwerkswellen sind an den Behälter durchsetzenden Profilen aufgehängt.

Diese bekannte Bauart ist konstruktiv sehr aufwändig und bringt insbesondere mit dem zu einem großen Teil im Behälter angeordneten Antriebsstrang unerwünschte Einbauten im Behälter, die das freie Behältervolumen für den Dünger reduzieren und den reibungslosen Düngerablauf zum Rührwerk und zu den Dosieröffnungen behindern und schließlich zur Ablagerung von Dünger an den stationären Bauteilen des Antriebsstrangs führen können.

Der Erfindung liegt die Aufgabe zugrunde, die vorgenannten Nachteile zu beheben und einen Rührwerksantrieb zu schaffen, der granulatschonend arbeitet, ein behinderungsfreies Nachfließen des Düngers im Behälter gestattet und mit geringem konstruktiven Aufwand realisierbar ist.

Diese Aufgabe wird bei einem Zweischeibenstreuer mit den Merkmalen des Oberbegriffs des Anspruchs 1 erfindungsgemäß dadurch gelöst, dass jedes Rührwerk im Boden des Behälters gelagert ist und der Antriebsstrang ausschließlich unterhalb des Behälters verläuft und über je ein in den Raum zwischen Boden und Wurfscheibe eingreifendes und zumindest den Raum unterhalb der Auslauföffnung freilassendes Getriebeteil das Rührwerk antreibt, wobei der Antriebsstrang ein mehrgliedriges Hebelgetriebe aufweist.

Bei der erfindungsgemäßen Ausbildung verläuft der Antriebsstrang ausschließlich in dem Freiraum unterhalb der tiefstliegenden Bereiche des Behälters. Der Behälter ist somit frei von Einbauten, so dass ein ungehinderter Ablauf des Düngers zum Boden und durch die Auslauföffnungen zu den Dosiervorrichtungen möglich ist. Der Antriebsstrang weist lediglich je ein Getriebeteil auf, das in den Raum zwischen jedem Boden und jeder Wurfscheibe eingreift und auf die im Boden gelagerte Rührwerkswelle wirkt. Das Getriebeteil greift vornehmlich in Fahrtrichtung von vorne in diesen Raum ein, lässt sich also so anordnen, dass der Raum zwischen der Auslauföffnung und der Dosiervorrichtung einerseits und der Wurfscheibe andererseits frei bleibt, so dass der Dünger über den gesamten Dosierbereich behinderungsfrei auf die Wurfscheibe gelangen kann. Auch einer Verlagerung des Aufgabepunktes, beispielsweise durch Verlagern der Dosiervorrichtung lässt sich auf diese Weise Rechnung tragen. Der Ausbau und Austausch der Wurfscheiben ist ebenso problemlos möglich, wie die Durchführung einer Probedosierung und die Restmengenentleerung.

In bevorzugter Ausführung treibt das Hebelgetriebe über je ein Getriebeteil die Welle eines Rührwerks in einer Drehschrittbewegung oder oszillierend an.

In einer vorteilhaften Ausführung ist in dem Antriebsstrang mindestens ein für beide Rührwerke wirksamer Schaltfreilauf angeordnet, so dass die Antriebswellen der Rührwerke in einer Drehschrittbewegung angetrieben werden. Stattdessen und vorzugsweise ist in dem Antriebsstrang jedoch für jedes Rührwerk ein Schaltfreilauf angeordnet, beispielsweise kann ein solcher Schaltfreilauf auf der Welle jedes Rührwerks sitzen.

Bei dieser bevorzugten Ausführung sorgt der Schaltfreilauf dafür, dass die Schwenkbewegung des endständigen Getriebeteils in eine Drehschrittbewegung umgesetzt wird, wobei der Drehwinkel und die Winkelgeschwindigkeit bei jedem Drehschritt durch entsprechende konstruktive Maßnahmen an den Bauteilen des Antriebsstrangs vorgegeben werden kann.

In einer Ausgestaltung der Erfindung weist das Hebelgetriebe linear hin- und herbewegte Zug- oder Schubstangen auf, die über je ein Getriebeteil in Form von angelenkten Verbindungshebeln die Welle der Rührwerke in eine Drehschrittbewegung versetzende Schwenkbewegung antreiben. Jeder Verbindungshebel kann zwei oder mehr Anlenkpunkte an den Zugstangen mit unterschiedlichem Abstand von der Drehachse der Rührwerkswelle aufweisen, um die Drehzahl des Rührwerks in Abhängigkeit von der (genormten) Zapfwellendrehzahl (540min⁻¹ bzw. 1000min⁻¹) einstellen zu können. Stattdessen können auch unterschiedlich lange Verbindungshebel zum Austausch vorgesehen sein.

Die Verbindungshebel sind vorzugsweise nach außen gekrümmt. Auf diese Weise lässt sich der Raum unterhalb der Auslauföffnung besonders einfach freihalten.

In einer bevorzugten Ausführungsform ist der Antriebsstrang von der Eingangswelle des Getriebes für die Wurfscheiben abgeleitet. Bei dieser Ausführungsform ist vorzugsweise innerhalb des Antriebsstrangs ein untersetzendes Getriebeteil angeordnet, um die Drehzahl der Antriebswelle der Rührwerke auf das gewünschte Maß zu reduzieren.

In weiterhin bevorzugter Ausführung ist dem Hebelgetriebe ein Exzenterantrieb zugeordnet, der die Zug- oder Schubstangen in die linear hin- und hergehende Bewegung versetzt. Durch die Exzentrizität des Exzenterantriebs und die Hebelverhältnisse lässt sich der Weg der Zug- oder Schubstangen und damit das Ausmaß der Drehschrittbewegung der Rührwerkswellen vorgeben.

Bei einem herkömmlichen Zweischeibenstreuer mit mechanischem Antrieb werden die beiden Wurfscheiben von der Zapfwelle eines Traktors über eine Gelenkwelle und das quer zur Fahrtrichtung liegende, eine Eingangswelle aufweisende Getriebe angetrieben. Im Sinne der Erfindung kann der Antriebsstrang von einer der die Wurfscheiben antreibenden Welle des Getriebes abgeleitet sein. Vorzugsweise ist er von der Eingangswelle unter Zwischenschaltung des Exzenterantriebs abgeleitet.

Gemäß einer weiteren Ausgestaltung weist der Antriebsstrang Einstellmittel auf, um die Drehzahl der Wellen der Rührwerke in Abhängigkeit von der Zapfwellendrehzahl des Traktors einzustellen. Hierbei kann es sich um untersetzende Getriebeteile, Teile der Hebelgetriebe oder austauschbare Hebel desselben handeln.

Gemäß einem anderen Ausführungsbeispiel der Erfindung ist etwa in der Mitte zwischen den Wurfscheiben ein Hydromotor angeordnet, der Teil des die Wellen der Rührwerke antreibenden Antriebsstrangs ist. Diese preislich etwas aufwändigere Ausführungsform hat den Vorteil, dass die Drehzahl des Hydromotors und damit die Drehzahl der Rührwerke in einfacher Weise gesteuert werden kann.

Der Hydromotor kann über einen Exzenter ein auf die Achsen der Rührwerke wirkendes Hebelgetriebe oder alternativ über ein Winkelgetriebe eine quer verlaufende Zwischenwelle antreiben, deren Drehmoment über je ein Winkel- oder Schneckengetriebe auf die Achsen der Rührwerke übertragbar ist.

In einer Ausführung dieses hydraulischen Antriebs kann vorgesehen sein, dass der Hydromotor für den Antrieb der Rührwerke auf einer etwa mittigen Stütze für den Behälter mit nach unten weisender Antriebswelle angeordnet ist. Statt dieser gemischt hydraulisch/mechanischen Variante kann auch vorgesehen sein, dass die Wurfscheiben auf einer quer verlaufenden Konsole angeordnet und von an der Konsole befestigten Hydromotoren angetrieben sind, und dass für den Antrieb der Rührwerke gleichfalls ein Hydromotor vorgesehen ist.

Vorzugsweise ist in dem Antriebsstrang eine Überlastsicherung für jedes Rührwerk angeordnet, um bei Festfahren eines Rührwerks im Behälter eine weitere Drehmomentübertragung zu unterbinden und somit das Rührwerk und die Getriebeteile vor Beschädigung zu bewahren.

Bei allen Ausführungsformen mit Hebelgetriebe ist von Vorteil, wenn die Zug- oder Schubstangen mit Bezug auf die Achsen der Wurfscheiben in Fahrtrichtung nach vorne versetzt sind, so dass sie während des Streuens nicht von Dünger angestrahlt werden.

Um einen effektiven Streubetrieb sicherzustellen, weist das Rührwerk Rührfinger auf, die flach über dem Boden des Behälters umlaufen und nur den Querschnitt der Auslauföffnung für kleinere Dosiermengen überstreicht. Damit ist sichergestellt, dass der Dünger im Bereich der Auslauföffnung - auch bei kleinster Einstellung des Dosierquerschnittes - stets fließfähig gehalten wird, andererseits der Dünger nicht im äußeren Bereich des Bodens liegen bleibt oder sich aufstaut. Ferner ist bei dieser Ausbildung eine einwandfreie Restentleerung des Behälters möglich. Die Rührfinger sind vorzugsweise sternförmig am Rührwerkskopf angeordnet.

Schließlich gibt die Erfindung die Möglichkeit, zur Verlagerung des Aufgabepunktes des Streugutes auf der Wurfscheibe die Dosiervorrichtung am Boden des trichterförmigen Unterteils mit Bezug auf die Auslauföffnung um die Rührwerksachse drehbar zu lagern. Die Einstellung des Aufgabepunktes ist dann ohne weiteres von außen möglich, da die Dosiervorrichtung behinderungsfrei zugänglich ist.

Dabei ist mit Vorteil vorgesehen, dass das in den Raum zwischen dem Boden des Behälters und der Wurfscheibe eingreifende Getriebeteil den Raum unterhalb der Auslauföffnung über den gesamten Drehwinkel der Dossiervorrichtung für die Verlagerung des Aufgabepunktes freilässt.

Nachstehend ist die Erfindung anhand einiger in der Zeichnung wiedergegebener Ausführungsbeispiele beschrieben. In der Zeichnung zeigen:
- Fig.1: eine perspektivische Ansicht eines Zweischeibenstreuers mit aufgeschnittenem Behälter und einer ersten Ausführungsform eines Rührwerkantriebs;
- Fig.2: eine der Fig.1 ähnliche Ansicht einer zweiten Ausführungsform des Rührwerkantriebs;
- Fig.3: eine der Fig.1 entsprechende Ansicht einer dritten Ausführungsform des Rührwerkantriebs;
- Fig.4: eine Seitenansicht einer vierten Ausführungsform des Rührwerkantriebs;
- Fig.5: eine Draufsicht auf den Rührwerkantrieb gemäß Fig. 4;
- Fig.6: einen Schnitt des Rührwerkkopfs;
- Fig.7: einen Schnitt einer anderen Ausführung des Rührwerks mit Schaltfreilauf;
- Fig.8: eine perspektivische Teilansicht einer fünften Ausführungsform des Rührwerkantriebs;
- Fig.9: eine Explosionsdarstellung des Rührwerkantriebs gemäß Fig.8 und
- Fig.10: eine Ausführungsform eines hydraulischen Antriebs für die Wurfscheiben und die Rührwerke.

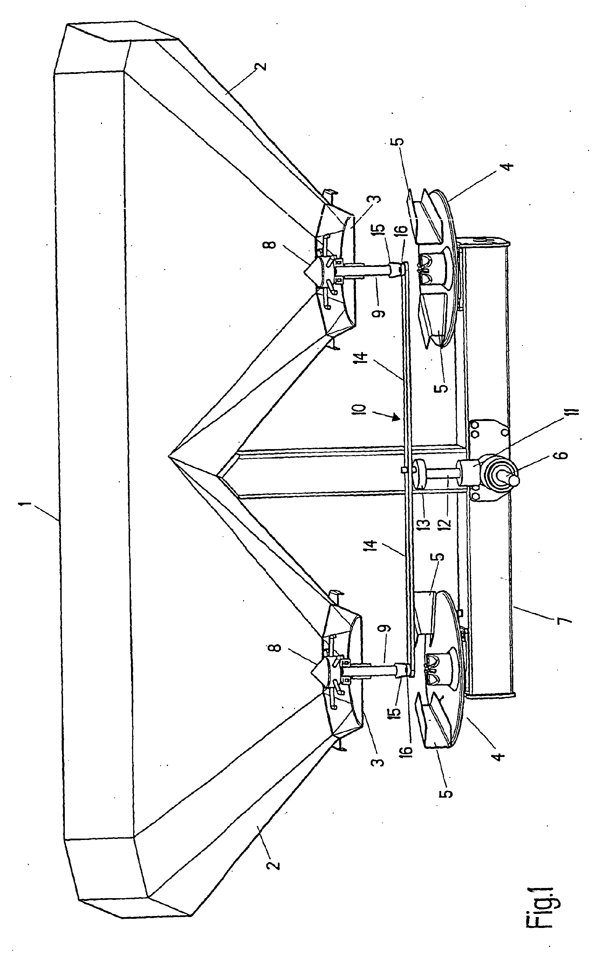

Fig.1 bis 3 zeigen schematisch den Aufbau eines Zweischeibenstreuers. Er weist einen großvolumigen Behälter 1 auf, der zwei sich trichterförmig verjüngende Unterteile 2 aufweist, wobei die Trichterwände in einem Boden 3 zusammenlaufen. Unterhalb jedes Bodens ist eine Wurfscheibe 4 angeordnet, die beim gezeigten Ausführungsbeispiel mit zwei Wurfschaufeln 5 besetzt ist. Die Wurfscheiben 4 werden von der Zapfwelle des Traktors über eine Gelenkwelle angetrieben, die an die Eingangswelle 6 eines Getriebes in einem sich quer erstreckenden Gehäuse 7 angeschlossen ist. Das Getriebe besteht im Wesentlichen aus einem eingangsseitig angeordneten Winkelgetriebe und einer Querwelle, die wiederum über endständige Winkelgetriebe die Antriebswellen der Wurfscheiben 4 in Drehung versetzt.

In jedem trichterförmigen Unterteil 2 befindet sich unmittelbar oberhalb des Bodens 3 ein Rührwerk 8, dessen Welle 9 jeweils im Boden 3 gelagert ist.

Zum Antrieb der Rührwerke 8 ist ein Antriebsstrang 10 vorgesehen, der etwa von der Mitte des Getriebes 7 ausgeht und ausschließlich im Raum unterhalb des Behälters 1 bzw. der Böden 3 und im Bereich der Wurfscheiben 4 oberhalb derselben verläuft.

Bei dem in Fig.1 gezeigten Ausführungsbeispiel ist der Antriebsstrang 10 der Rührwerke 8 von der Eingangswelle 6 des Getriebes abgeleitet. Zu diesem Zweck wird das Drehmoment der Eingangswelle 6 über ein schematisch angedeutetes Winkelgetriebe 11 auf eine senkrechte Welle 12 übertragen, die an ihrem oberen Ende eine Scheibe 13 mit einem exzentrischen Zapfen trägt, der seinerseits Zugstangen 14 in eine lineare Hin- und Herbewegung versetzt. Die Zugstangen 14 übertragen ihre Bewegung auf endständig angeordnete Verbindungshebel 15. Die Verbindungshebel 15 sind bei 16 an den Schubstangen 14 angelenkt. Durch die Schwenkbewegung der Verbindungshebel 15 wird je eine oszillierende Drehbewegung auf die Antriebswellen 9 der Rührwerke 8 übertragen. Die oszillierende Drehbewegung kann durch Anordnung eines Schaltfreilaufs, z.B. eines Klemmkörperfreilaufs, auf der Antriebswelle 9 des Rührwerks 8 in eine Drehschrittbewegung des Rührwerks umgeformt werden. Durch eine geeignete Übersetzung in der Antriebsverbindung 11, 12 und 13 und/oder durch entsprechende Hebelverhältnisse des Anlenkpunktes 16 zu dem Angriffspunkt der Verbindungshebel 15 an der Rührwerkswelle 9 lässt sich die Drehschrittgeschwindigkeit auf ein gewünscht niedriges Maß reduzieren und durch wenigstens zwei vorgegebene Einstellungen oder durch Austausch der Verbindungshebel 15 an die normierten Zapfwellendrehzahlen (540min⁻¹ bzw. 1000min⁻¹) anpassen.

In Fig.1 kommt nur undeutlich zum Ausdruck, dass die Verbindungshebel 15 in Fahrtrichtung von vorne in den Raum zwischen dem Boden 3 und der Wurfscheibe 4 eingreifen. Die Anordnung ist so getroffen, dass der Raum unterhalb der im Boden angeordneten, in Fig.1 nicht gezeigten Auslauföffnung einerseits und der Wurfscheibe andererseits frei bleibt, so dass der Dünger behinderungsfrei auf die Wurfscheibe 4 gelangt.

Anhand der Fig.1 sei auch eine nicht gezeigte hydraulische Antriebsvariante erläutert. In diesem Fall entfällt das Winkelgetriebe 11. Stattdessen ist etwa mittig zwischen den Wurfscheiben 4 ein vom Traktor versorgter Hydromotor vorgesehen, dessen Ausgangswelle analog der Welle 12 eine Scheibe 13 mit einem Exzenterzapfen antreibt. Der weitere Aufbau des Antriebsstrangs kann derselbe sein wie bei der Ausführungsform nach Fig.1.

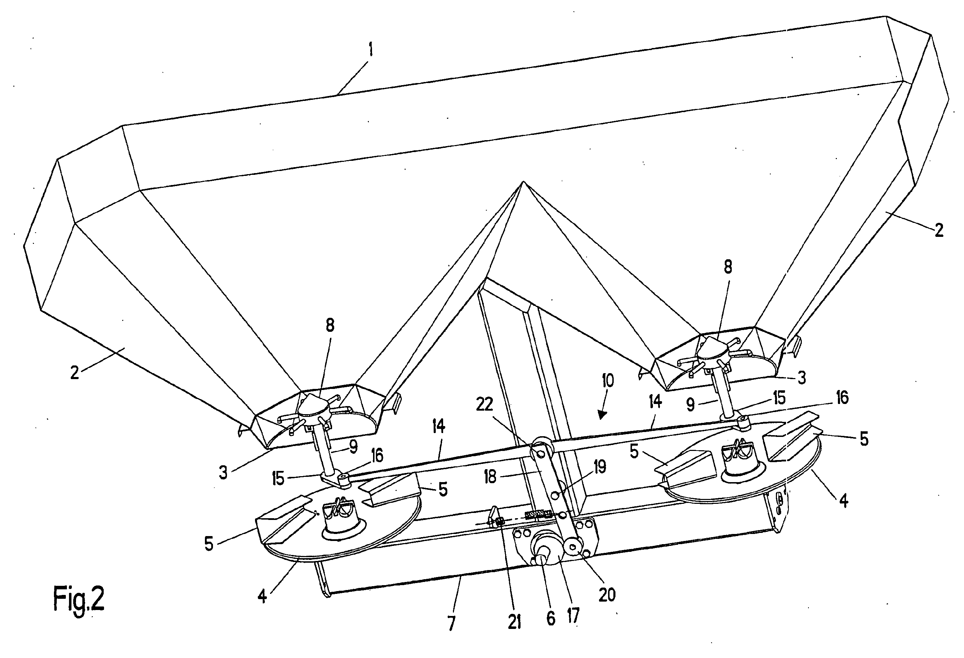

Das Ausführungsbeispiel des Antriebsstrangs 10 gemäß Fig.2 unterscheidet sich von dem der Fig.1 dadurch, dass auf der Eingangswelle 6 des Getriebes ein Exzenter 17 sitzt, dem ein bei 19 ortsfest gelagerter Kipphebel 18 mit einer Rolle 20 anliegt. Der Kipphebel wird unter Wirkung einer Feder 21 in Anlage am Exzenter gehalten und greift mit seinem anderen Ende über ein Gelenk 22 an Zugstangen 14 an, die - wie beim Ausführungsbeispiel nach Fig.1 - über Verbindungshebel 15 an den Antriebswellen 9 der Rührwerke 8 angreifen. Auch bei diesem Ausführungsbeispiel ist vorzugsweise zwischen der Welle 9 und dem Rührwerk 8 ein Schaltfreilauf angeordnet, so dass die Rührwerke in eine Drehschrittbewegung versetzt werden.

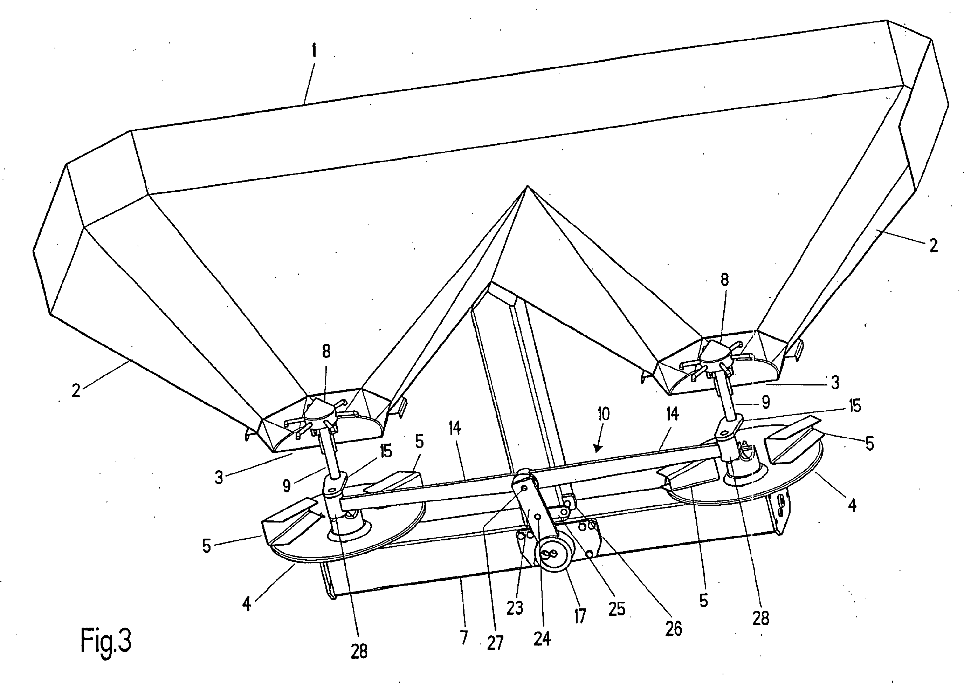

Bei dem Ausführungsbeispiel gemäß Fig.3 sitzt auf der Eingangswelle des Getriebes wiederum ein Exzenter 17. Auf dessen Exzenterfläche liegt ein Kipphebel 23 mit seinem einen Ende an, der über ein Gelenk 24 und eine Führungslasche 25 an einem ortsfesten Gelenk 26 geführt ist. Der Kipphebel 23 greift mit seinem anderen Ende über ein Gelenk 27 an den Zugstangen 14 des Antriebsstrangs 10 an, die wiederum
- wie bei den Ausführungsbeispielen gemäß Fig.1 und 2 - über Gelenke 28 und Verbindungshebel 15 die Wellen 9 der Rührwerke 8 bei Zwischenschaltung eines Freilaufs in einer Drehschrittbewegung antreiben.

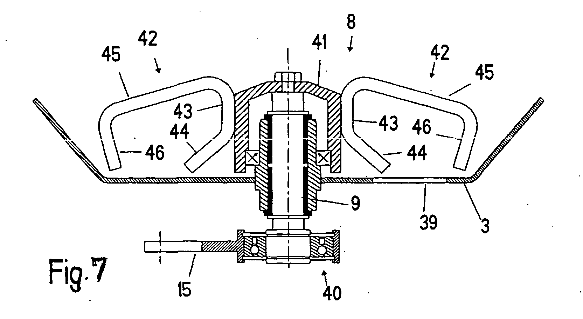

Bei dem bevorzugten Ausführungsbeispiel gemäß 4 bis 6 entspricht der Antriebsstrang 10 im Wesentlichen dem der Figuren 2 und 3. Von einer von dem Exzenter über ein Festlager 38 angetriebenen Schwinge 37, die über Gelenke 36 an je einer Zugstange 33 angreift, werden die Zugstangen 33 in eine hin- und hergehende Bewegung versetzt. An den Enden der Zugstangen 33 sind über Gelenke 35 gekrümmte Hebel 34 angelenkt, die jeweils auf eine Welle der Rührwerke 8 mit den Rührwerksköpfen 41 und den Rührwerksfingern 42 wirken. Die Anordnung ist mit Bezug auf Figur 7 näher beschrieben.

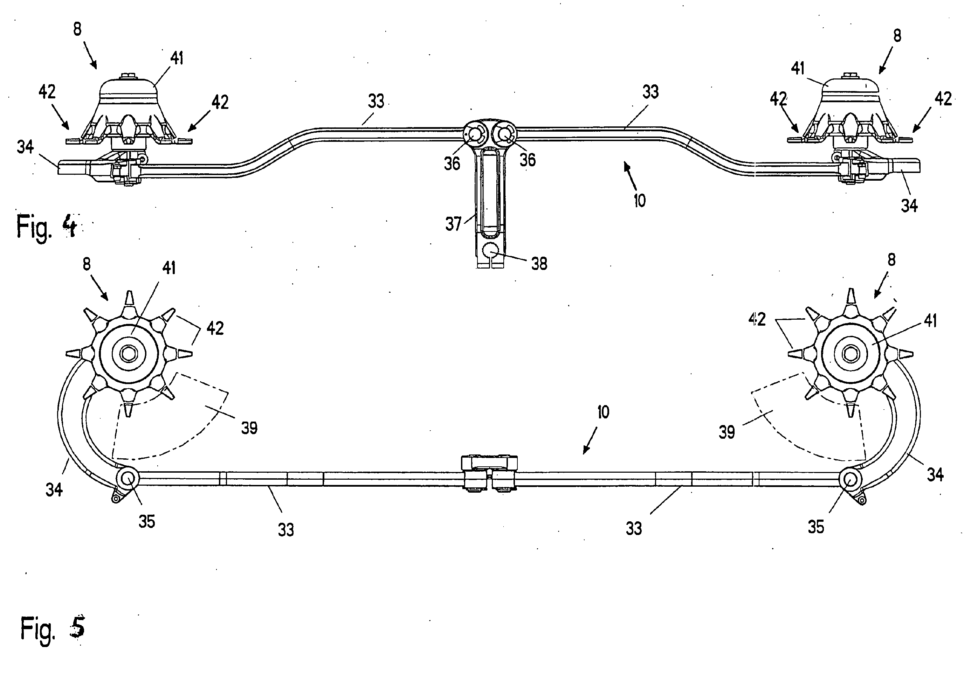

Die Zugstangen 33 sind in der Vertikalebene, wie aus Figur 5 ersichtlich abgekröpft und greifen mit ihren zum Gelenk 35 weisenden Ende in den Raum zwischen den Boden 3 des Streugut-Behälters und der Wurfscheibe 4 mit den Wurfschaufeln 5 (Figur 1 bis 3). Zugleich bildet die Abkröpfung eine Überlastsicherung indem sich die Zugstange 33 bei Festsetzen des Rührwerks etwas strecken kann.

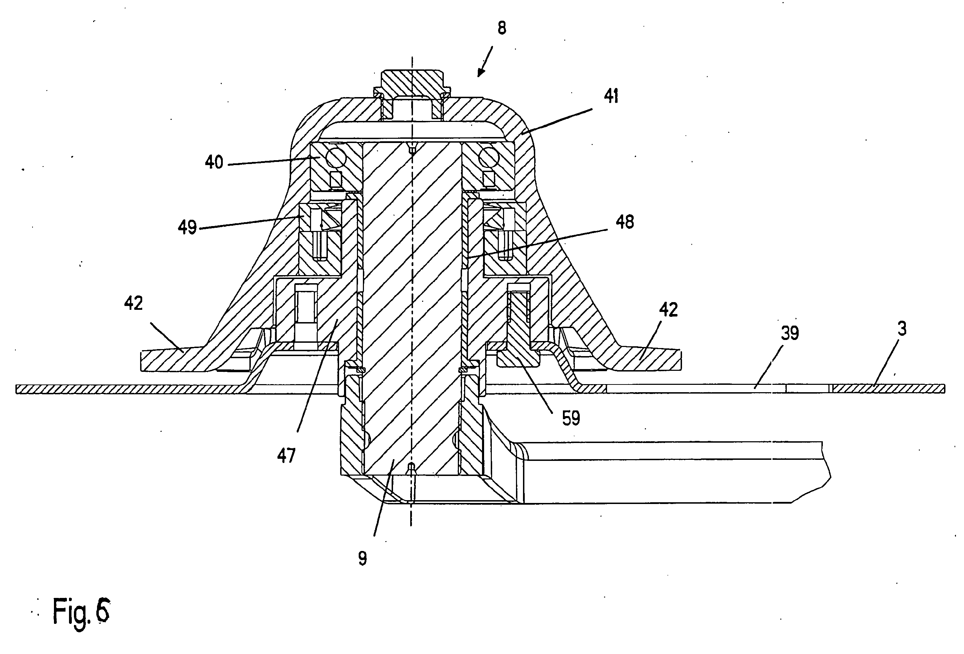

Bei diesem Ausführungsbeispiel sind die Rührfinger 42, wie insbesondere die Figuren 4 und 5 zeigen, tatsächlich fingerartig ausgebildet. Sie überstreichen mit ihrem in einer stumpfen Spitze zulaufenden Ende lediglich den inneren Bereich der in Figur 6 mit strichpunktierten Linien angedeuteten Auslauföffnung 39 in dem Boden 3 (Figur 7) des Streugut-Behälters.

Die Zugstangen 33 und die daran angeschlossenen gekrümmten Hebel 34 versetzen die Rührwerkswelle 9 in eine oszillierende Bewegung, die mittels eines zwischen ihr und dem Rührwerkskopf 41 (Figur 6) angeordneten Schaltfreilaufs 40, z.B. einen Klemmkörperfreilauf, den Rührwerkskopf mit den Rührwerksfingern 42 in eine Drehschrittbewegung versetzen. Die Rührwerkswelle 9 sitzt in Lagerbuchsen 48 die ihrerseits in einem Lagergehäuse 47 angeordnet sind, das mittels Schrauben 59 am Boden 3 des Streugut-Behälters befestigt ist. Um insbesondere den Schaltfreilauf 40 vor Zutritt von Düngerabrieb und Schmutz aus dem Raum zwischen den Rührfingern 42 und dem Boden 3 zu schützen, ist zwischen dem Rührwerkskopf 41 und dem Lagergehäuse 47 ein Labyrinth und an deren Ende eine Feinabdichtung 49 in Form von Simmeringen vorgesehen.

Die Krümmung der Verbindungskabel ist so gewählt, dass sie die Auslauföffnungen 39 im Boden 3 freilassen.

Fig. 7 zeigt den Boden 3 des Behälters 1 mit der Auslauföffnung 39, unterhalb der eine nicht gezeigte Dosierplatte mit Dosieröffnung, deren freier Querschnitt von einem nicht gezeigten Schieber gesteuert wird, angeordnet ist. Oberhalb des Bodens läuft das Rührwerk 8 um, dessen Welle 9 beispielsweise in der in den Fig. 1 bis 3 beschriebenen Weise über einen Verbindungshebel 15 angetrieben wird. Um die oszillierende Schwenkbewegung des Verbindungshebels 15 in eine Drehschrittbewegung umzuwandeln, sitzt zwischen dem Verbindungshebel 15 und auf der Antriebswelle 9 des Rührwerks 8 ein Schaltfreilauf 40, z.B. in Form eines Klemmkörperfreilaufs.

An dem Rührwerkkopf 41 sind zumindest zwei, vorzugsweise vier oder mehr Rührfinger 42 symmetrisch angebracht. Sie bestehen beim gezeigten Ausführungsbeispiel aus einem Rundstahl, der mit einem Abschnitt 43 an der Nabe 41 befestigt ist. An den Abschnitt 43 schließt sich nach unten ein nach innen geneigter Abschnitt 44 an, der die Dosieröffnung 39 im Bereich ihrer kleinsten Querschnittseinstellung überstreicht. Nach oben schließt sich an den Abschnitt 43 ein nach außen abgebogener Abschnitt 45 und an diesen wiederum ein nach unten abgebogener Abschnitt 46 an, der den Boden 3 im Bereich seiner Peripherie überstreicht. Damit ist für einen staufreien Zulauf des Düngers zur Dosieröffnung 39 und durch den äußeren Abschnitt 46 für ein einwandfreies Nachfließen des Düngers im Bereich der Behälterwandung gesorgt, was vor allem für die Restentleerung des Behälters wichtig ist.

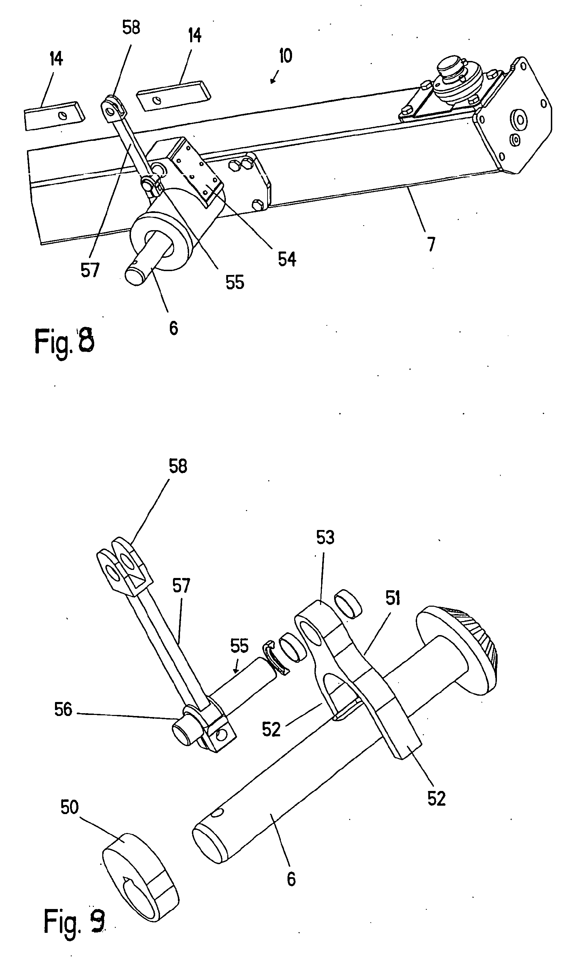

Fig.8 und 9 zeigen eine weitere Variante des Antriebsstrangs 10. Auf der Eingangswelle 6 des Getriebes sitzt drehfest ein Exzenter 50 (Fig.9), der von den Schenkeln 52 einer Gabel 51 spielfrei übergriffen ist. Die Gabel ist mit ihrem Kopf 53 in einem Gehäuse 54 (Fig.7) angeordnet. Im Gabelkopf 53 sitzt drehfest eine Achse 55, auf deren aus dem Gehäuse 54 herausragenden Ende 56 eine Schwinge 57 befestigt ist. Die Schwinge 57 greift über eine Gabel 58 an den Zugstangen 14 (siehe Fig.1) an. Die von dem Exzenter 50 erzeugte Oszillationsbewegung des Gabelkopfs und der Achse 55 wird in eine Schwenkbewegung der Schwinge 57 umgeformt, die wiederum die Zugstangen 14 in eine Hin- und Herbewegung versetzt. Der weitere Aufbau des Antriebsstrangs und der Bewegungsablauf können demjenigen der Fig.1 entsprechen.

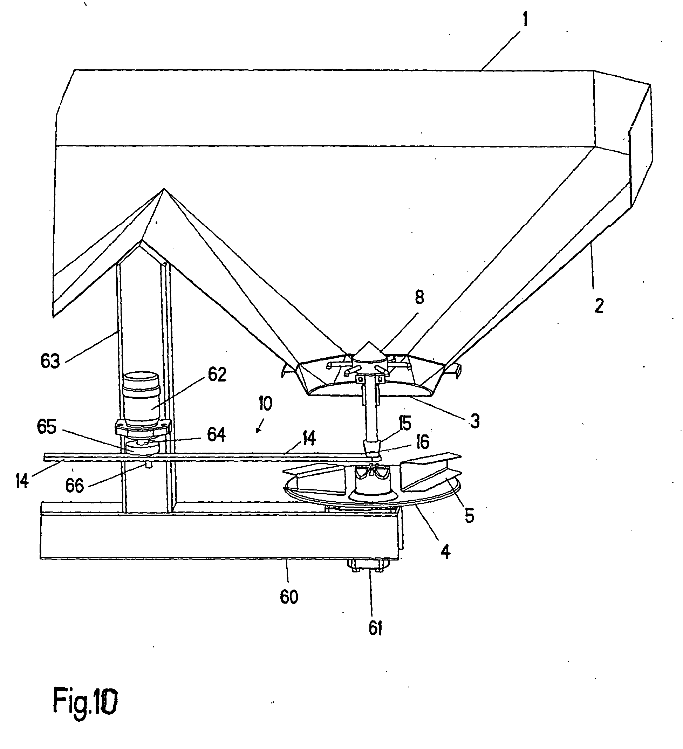

Fig.10 zeigt eine vollhydraulische Ausführungsform. Hierbei ist das Getriebe der zuvor beschriebenen Ausführungsbeispiele durch eine quer verlaufende Konsole 60 ersetzt, die im Wesentlichen von einem nach unten offenen U-Profil gebildet ist. Die Wurfscheiben 4 werden jeweils von einem an der Konsole befestigten Hydromotor 61 angetrieben. Zwischen den Wurfscheiben 4 ist ein Hydromotor 62, z.B. an einer mittleren Stütze 63 für den Behälter 1, befestigt, dessen Antriebswelle 64 nach unten weist und über eine auf dieser sitzenden Scheibe 65 mit einem Exzenterzapfen 66 die Zugstangen 14 eines ansonsten der Fig.1 entsprechenden Antriebsstrangs 10 in eine lineare Hin- und Herbewegung versetzt.

Während die normierten Drehzahlen der Zapfwelle von Traktoren bei 540min⁻¹ bzw. 1000min⁻¹ liegen, und die Drehzahl der Wurfscheiben 4 im Bereich von 1000min⁻¹ liegen sollte, darf das Rührwerk 8 nur mit wesentlich geringerer Drehzahl bewegt werden. Die Untersetzung lässt sich bei den Ausführungsbeispielen nach den Fig.1 bis 3, wo der Antriebsstrang 10 aus Hebelgetrieben besteht, problemlos durch entsprechende Hebelverhältnisse verwirklichen. Gleiches gilt für die Ausführungsform nach Fig.4 bis 8. Bei einem hydraulischen Antrieb (Fig.9) kann stattdessen oder zusätzlich die Drehzahl des Hydromotors herangezogen werden.

Um für beide Zapfwellendrehzahlen gleiche Drehschrittgeschwindigkeiten am Rührwerk 8 zu erhalten, kann beispielsweise bei den Ausführungsbeispielen nach den Fig.1 bis 3 und 4 bis 8 die Anlenkung der Zugstangen 14, 33 an den Verbindungshebeln 15, 37 an verschiedenen Punkten vorgesehen sein, so dass die wirksame Hebellänge der Verbindungshebel 15, 34 einstellbar ist, oder können die Verbindungshebel 15, 34 durch solche anderer Länge ausgewechselt werden.

Im Falle eines Festsetzens eines Rührwerks, sollte eine Überlastsicherung vorgesehen sein, beispielsweise durch entsprechende Auslegung der Schaltfreiläufe. Die einfachste Ausführung wird aber beispielsweise durch die abgekröpften Zugstangen 33 der Fig. 4 und 5 erreicht, die im Falle einer Überlast gestreckt werden.

Für alle Ausführungsformen gilt, dass die Achse der Rührwerkwelle 9 mit der Achse der nicht gezeigten Antriebswelle der Wurfscheiben zusammenfällt.

## Patentansprüche

1. Zweischeibenstreuer zum Verteilen von Streugut, insbesondere Dünger, mit einem Streugut-Behälter (1) mit zwei trichterförmig zu je einem Boden (3) verlaufenden Unterteilen (2), mindestens je einer Auslauföffnung in jedem Boden (3), je einem Rührwerk (8) im Behälter oberhalb jedes Bodens und einer unter jedem Boden angeordneten Wurfscheibe (4) mit einem Antrieb, wobei die Rührwerke (8) über einen etwa von der Mitte zwischen den Wurfscheiben ausgehenden Antriebsstrang mit einer geringeren Drehzahl als die Wurfscheiben angetrieben sind, **dadurch gekennzeichnet, dass** jedes Rührwerk (8) im Boden (3) des Behälters (1) gelagert ist und der Antriebsstrang (10) ausschließlich unterhalb des Behälters (1) verläuft und über je ein in den Raum zwischen Boden (3) und Wurfscheibe (4) eingreifendes und zumindest den Raum unterhalb der Auslauföffnung (39) freilassendes Getriebeteil (15, 32, 34) das Rührwerk (8) antreibt, wobei der Antriebsstrang (10) ein mehrgliedriges Hebelgetriebe (14,15,18 bis 21,25 bis 27, 33 bis 38, 51 bis 58) aufweist,

2. Zweischeibenstreuer nach Anspruch 1, **dadurch gekennzeichnet, dass** das Hebelgetriebe über je ein Getriebeteil (15,34) die Welle (9) eines Rührwerks (8) in einer Drehschrittbewegung oder oszillierend antreibt.

3. Zweischeibenstreuer nach Anspruch 1 oder 2, **dadurch gekennzeichnet, dass** in dem Antriebsstrang (10) für jedes Rührwerk (8) ein die Rührwerke in eine Drehschrittbewegung versetzender Schaltfreilauf (40) angeordnet ist.

4. Zweischeibenstreuer nach Anspruch 3, **dadurch gekennzeichnet, dass** der Schaltfreilauf (40) auf der Welle (9) des Rührwerks (8) sitzt.

5. Zweischeibenstreuer nach einem der Ansprüche 1 bis 4, **dadurch gekennzeichnet, dass** das Hebelgetriebe linear hin- und herbewegte Zug- oder Schubstangen (14,33) aufweist, die über je ein Getriebeteil in Form von angelenkten Verbindungshebeln (15,34) die Welle (9) der Rührwerke (8) in eine Drehschrittbewegung versetzende Schwenkbewegung antreiben.

6. Zweischeibenstreuer nach Anspruch 5, **dadurch gekennzeichnet, dass** die Verbindungshebel (34) nach außen gekrümmt sind.

7. Zweischeibenstreuer nach Anspruch 1 bis 6, **dadurch gekennzeichnet, dass** dem Hebelgetriebe (14,15, 18 bis 21, 25 bis 27, 33 bis 38, 51 bis 58) ein Exzenterantrieb (12,13,17,20,25,50) zugeordnet ist, der die Zug- oder-Schubstangen (14,33) in die hin- und hergehende Bewegung versetzt.

8. Zweischeibenstreuer nach einem der Ansprüche 1 bis 7, wobei beide Wurfscheiben (4) von der Zapfwelle eines Traktors über eine Gelenkwelle und ein quer zur Fahrtrichtung liegendes, eine Eingangswelle (6) aufweisendes Getriebe (7) antreibbar sind, **dadurch gekennzeichnet, dass** der Antriebsstrang (10) von einer der die Wurfscheiben (4) antreibenden Wellen des Getriebes (7) abgeleitet ist.

9. Zweischeibenstreuer nach einem der Ansprüche 1 bis 8, **dadurch gekennzeichnet, dass** der Antriebsstrang (10) von der Eingangswelle (6) des Getriebes (7) abgeleitet ist.

10. Zweischeibenstreuer nach einem der Ansprüche 1 bis 8, **dadurch gekennzeichnet, dass** der Antriebsstrang (10) von einer Querwelle des Getriebes (7) abgeleitet ist.

11. Zweischeibenstreuer nach einem der Ansprüche 1 bis 10, **dadurch gekennzeichnet, dass** der Antriebsstrang (10) Einstellmittel aufweist, um die Drehzahl der Wellen (9) der Rührwerke (8) in Abhängigkeit von der Zapfwellendrehzahl des Traktors einzustellen.

12. Zweischeibenstreuer nach einem der Ansprüche 1 bis 11, **dadurch gekennzeichnet, dass** die Zug- oder Schubstangen (14,33) mit Bezug auf die Achsen der Wurfscheiben (4) in Fahrtrichtung nach vorne versetzt angeordnet sind.

13. Zweischeibenstreuer nach einem der Ansprüche 1 bis 12, **dadurch gekennzeichnet, dass** etwa in der Mitte zwischen den Wurfscheiben (4) ein Motor, z.B. Elektromotor oder Hydromotor, angeordnet ist, der Teil des die Wellen (9) der Rührwerke (8) antreibenden Antriebsstrangs (10) ist.

14. Zweischeibenstreuer nach Anspruch 12, **dadurch gekennzeichnet, dass** der Hydromotor über einen Exzenter (65,66) ein auf die Wellen (9) der Rührwerke (8) wirkendes Hebelgetriebe (14,15) antreibt.

15. Zweischeibenstreuer nach Anspruch 12 oder 14, **dadurch gekennzeichnet, dass** der Hydromotor für den Antrieb der Rührwerke (8) an einer etwa mittigen Behälterstütze (63) befestigt und mit seiner Antriebswelle (64) nach unten weisend angeordnet ist.

16. Zweischeibenstreuer nach einem der Ansprüche 13 bis 15, **dadurch gekennzeichnet, dass** die Wurfscheiben (4) auf einer quer verlaufenden Konsole (60) angeordnet und von an der Konsole befestigten Hydromotoren (61) angetrieben sind, und dass für den Antrieb der Rührwerke (8) nur ein Hydromotor vorgesehen ist.

17. Zweischeibenstreuer nach einem der Ansprüche 1 bis 16, **dadurch gekennzeichnet, dass** in dem Antriebsstrang (10) eine Überlastsicherung für jedes Rührwerk angeordnet ist.

18. Zweischeibenstreuer nach einem der Ansprüche 1 bis 17, **dadurch gekennzeichnet, dass** die Zug- oder Schubstangen (33) abgekröpft sind und zugleich als Überlastsicherung dienen.

19. Zweischeibenstreuer nach einem der Ansprüche 1 bis 18, **dadurch gekennzeichnet, dass** das Rührwerk (8) Rührfinger (42) aufweist, die nur den für kleinere Dosiermengen maßgeblichen Querschnitt der Auslauföffnung (39) überstreichen.

20. Zweischeibenstreuer nach einem der Ansprüche 1 bis 19, **dadurch gekennzeichnet, dass** die Rührfinger (42) flach über dem Boden (3) des Streugut-Behälters (1) verlaufen.

21. Zweischeibenstreuer nach einem der Ansprüche 1 bis 20, **dadurch gekennzeichnet, dass** zur Verlagerung des Aufgabepunktes des Streugutes auf der Wurfscheibe (4) jede Dosiervorrichtung am trichterförmigen Unterteil (2) um die Achse (9) des Rührwerks (8) drehbar gelagert ist.

22. Zweischeibenstreuer nach einem der Ansprüche 1 bis 21, **dadurch gekennzeichnet, dass** das in den Raum zwischen dem Boden des Behälters (1) und der Wurfscheibe (4) eingreifende Getriebeteil (15,32,34,38) den Raum unterhalb der Dosieröffnung (39) über den gesamten Drehwinkel des Bodens für die Verlagerung des Aufgabepunktes freilässt.

## Claims

1. Two-disk spreader for distributing granular material, particularly fertilizer, with a granular material container (1) having two funnel-shaped lower parts (2) each running to a base (3), at least one outlet opening in each base (3), in each case agitator (8) in the container above each base and a spreading disk (4) positioned beneath each base and having a drive, the agitators (8) being driven by a drive string emanating from the centre between the spreading disks at a lower speed than said spreading disks, **characterized in that** each agitator (8) is mounted in the base (3) of container (1) and the drive string (10) runs exclusively below the container (1) and the agitator (8) is driven by means of in each case one gear part (15, 32, 34) engaging in the space between base (3) and spreading disk (4) and at least leaving free the space below the outlet opening (39), the drive string (10) having a multisection lever gear (14, 15, 18 to 21, 25 to 27, 33 to 38, 51 to 58).

2. Two-disk spreader according to claim 1, **characterized in that** the lever gear drives by in each case one gear part (15, 34) the shaft (9) of an agitator (8) in a rotary step movement or in oscillating manner.

3. Two-disk spreader according to claim 1 or 2, **characterized in that** in the drive string (10) for each agitator (8) is provided a control freewheel mechanism (40) bringing the agitators into a rotary step movement.

4. Two-disk spreader according to claim 3, **characterized in that** the control freewheel mechanism (40) is seated on shaft (9) of agitator (8).

5. Two-disk spreader according to one of the claims 1 to 4, **characterized in that** the lever gear has linearly backwards and forwards moved connecting or tie rods (14, 33), which by means of in each case one gear part in the form of articulated connecting levers (15, 34) drive the shaft (9) of agitators (8) in a pivoting rotary step movement.

6. Two-disk spreader according to claim 5, **characterized in that** the connecting levers (34) are outwardly curved.

7. Two-disk spreader according to claims 1 to 6, **characterized in that** with the lever gear (14, 15, 18 to 21, 25 to 27, 33 to 38, 51 to 58) is associated an eccentric drive (12, 13, 17, 20, 25, 50), which gives the connecting or tie rods (14, 33) the backwards and forwards movement.

8. Two-disk spreader according to one of the claims 1 to 7, both spreading disks (4) being drivable by the power take-off shaft of a tractor by means of a universal shaft and a gear (7) having a universal shaft (6) positioned at right angles to the travel direction, **characterized in that** the drive string (10) is taken from one of the shafts of gear (7) driving the spreader disks (4) .

9. Two-disk spreader according to one of the claims 1 to 8, **characterized in that** the drive string (10) is taken from the primary shaft (6) of gear (7).

10. Two-disk spreader according to one of the claims 1 to 8, **characterized in that** the drive string (10) is taken from a cross-shaft of gear (7).

11. Two-disk spreader according to one of the claims 1 to 10, **characterized in that** the drive string (10) has adjusting means in order to adjust the speed of shafts (9) of agitators (8) as a function of the power take-off shaft speed of the tractor.

12. Two-disk spreader according to one of the claims 1 to 11, **characterized in that** the connecting or tie rods (14, 33) are forwardly displaced in the travel direction with respect to the shafts of spreader disks (4).

13. Two-disk spreader according to one of the claims 1 to 12, **characterized in that** roughly in the centre between the spreader disks (4) is provided a motor, e.g. an electric or hydraulic motor, which is part of the drive string (10) driving the shafts (9) of agitators (8).

14. Two-disk spreader according to claim 12, **characterized in that** the hydraulic motor by means of an eccentric cam (65, 66) drives a lever gear (14, 15) acting on the shafts (9) of agitators (8).

15. Two-disk spreader according to claim 12 or 14, **characterized in that** the hydraulic motor is fixed to a roughly central container support (63) for driving agitators (8) and its drive shaft (64) points downwards.

16. Two-disk spreader according to one of the claims 13 to 15, **characterized in that** the spreader disks (4) are placed on a transversely directed bracket (60) and are driven by hydraulic motors (61) fixed to the bracket, and that only one hydraulic motor is provided for driving agitators (8).

17. Two-disk spreader according to one of the claims 1 to 16, **characterized in that** there is an overload protection for each agitator in the drive string (10) .

18. Two-disk spreader according to one of the claims 1 to 17, **characterized in that** the connecting or tie rods (33) are offset and at the same time serve as an overload protection.

19. Two-disk spreader according to one of the claims 1 to 18, **characterized in that** the agitator (8) has agitating fingers (42), which only pass over the cross-section of outlet opening (39) decisive for smaller dosing quantities.

20. Two-disk spreader according to one of the claims 1 to 19, **characterized in that** the agitating fingers (42) run flat over the base (3) of granular material container (1).

21. Two-disk spreader according to one of the claims 1 to 20, **characterized in that** for the displacement of the loading point of the granular material to the spreader disk (4), each dosing device is pivoted about shaft (9) of agitator (8) on the funnel-shaped lower part (2).

22. Two-disk spreader according to one of the claims 1 to 21, **characterized in that** the gear part (15, 32, 34, 38) engaging in the space between the base of container (1) and spreader disk (4) leaves free the space below the dosing opening (39) over the entire rotation angle of the base for the displacement of the loading point.

## Revendications

1. Epandeur centrifuge à deux disques pour la distribution de produit d'épandage, plus particulièrement d'engrais, comprenant un réservoir (1) à produit d'épandage présentant deux parties inférieures (2) en forme de trémie s'étendant chacune vers un fond (3), au moins une ouverture d'évacuation dans chacun des fonds (3) et un agitateur (8) dans le réservoir au-dessus de chacun des fonds et un disque éjecteur (4) disposé en-dessous de chacun des fonds comportant un dispositif d'entraînement, les agitateurs (8) étant entraînés par une chaîne cinématique prenant naissance sensiblement centralement entre les disques éjecteurs à vitesse de rotation inférieure à celle des disques éjecteurs, **caractérisé en ce que** chaque agitateur (8) est disposé dans le fond (3) du réservoir (1) et **en ce que** la chaîne cinématique (10) s'étend exclusivement sous le réservoir (1) et **en ce qu'**elle entraîne chacun des agitateurs (8) par l'intermédiaire d'un élément de transmission (15, 32, 34) pénétrant dans l'espace entre le fond (3) et le disque éjecteur (4) et laissant libre au moins l'espace en-dessous de la sortie d'évacuation (39), la chaîne cinématique (10) présentant une transmission à levier à plusieurs éléments (14, 15, 18 à 21, 25 à 27, 33 à 38, 51 à 58).

2. Epandeur centrifuge à deux disques selon la revendication 1, **caractérisé en ce que** la transmission à levier entraîne l'arbre (9) de chacun des agitateurs (8) par l'intermédiaire d'un élément de transmission (15,34) selon un mouvement de rotation pas à pas ou en oscillation.

3. Epandeur centrifuge à deux disques selon la revendication 1 ou 2, **caractérisé en ce que** dans la chaîne cinématique (10), pour chacun des agitateurs (8), est disposé un commutateur de fonctionnement libre (40) mettant les agitateurs dans un régime de mouvement de rotation pas à pas.

4. Epandeur centrifuge à deux disques selon la revendication 3, **caractérisé en ce que** le commutateur de fonctionnement libre (40) est monté sur l'arbre (9) de l'agitateur (8).

5. Epandeur centrifuge à deux disques selon l'une quelconque des revendications 1 à 4, **caractérisé en ce que** la transmission à levier présente des bielles de traction ou de poussée (14,33) soumises à un mouvement de va et vient linéaire qui entraînent l'arbre (9) de chacun des agitateurs (8) par l'intermédiaire d'un élément de transmission sous la forme de leviers d'accouplement articulés (15,34) dans un mouvement d'oscillation alternant avec un mouvement de rotation pas à pas.

6. Epandeur centrifuge à deux disques selon la revendication 5, **caractérisé en ce que** les leviers d'accouplement (34) sont recourbés vers l'extérieur.

7. Epandeur centrifuge à deux disques selon la revendication 1 à 6, **caractérisé en ce que** l'on associe à la transmission à levier (14, 15, 18 à 21, 25 à 27, 33 à 38, 51 à 58) une commande par excentrique (12,13,17,20,25,50) qui confère aux bielles de traction ou de poussée (14,33) le mouvement de va et vient.

8. Epandeur centrifuge à deux disques selon l'une quelconque des revendications 1 à 7, dans lequel les deux disques éjecteurs (4) peuvent être entraînés par la prise de force d'un tracteur par l'intermédiaire d'un arbre articulé et d'une transmission (7) transversale à la direction d'avance et présentant un arbre d'entraînement (6), **caractérisé en ce que** la chaîne cinématique (10) est dérivée de l'un des arbres de la transmission (7) entraînant les disques éjecteurs (4).

9. Epandeur centrifuge à deux disques selon l'une quelconque des revendications 1 à 8, **caractérisé en ce que** la chaîne cinématique (10) est dérivée de l'arbre d'entraînement (6) de la transmission (7).

10. Epandeur centrifuge à deux disques selon l'une quelconque des revendications 1 à 8, **caractérisé en ce que** la chaîne cinématique (10) est dérivée de l'arbre transversal de la transmission (7).

11. Epandeur centrifuge à deux disques selon l'une quelconque des revendications 1 à 10, **caractérisé en ce que** la chaîne cinématique (10) présente des moyens de réglage pour régler la vitesse de rotation des arbres (9) des disques éjecteurs (8) en fonction de la vitesse de rotation de la prise de force du tracteur.

12. Epandeur centrifuge à deux disques selon l'une quelconque des revendications 1 à 11, **caractérisé en ce que** les bielles de traction ou de poussée (14,33) sont disposées décalées vers l'avant dans le sens de la marche par rapport aux axes des disques éjecteurs (4).

13. Epandeur centrifuge à deux disques selon l'une quelconque des revendications 1 à 12, **caractérisé en ce que** sensiblement centralement entre les disques éjecteurs (4) est disposé un moteur, par exemple un moteur électrique ou hydraulique, qui constitue un élément de la chaîne cinématique (10) entraînant les arbres (9) des agitateurs (8).

14. Epandeur centrifuge à deux disques selon la revendication 12, **caractérisé en ce que** le moteur hydraulique entraîne par l'intermédiaire d'un excentrique (65,66) une transmission à levier (14,15) agissant sur les arbres (9) des agitateurs (8).

15. Epandeur centrifuge à deux disques selon la revendication 12 ou 14, **caractérisé en ce que** le moteur hydraulique pour l'entraînement des agitateurs (8) est fixé à un élément de support (63) sensiblement médian du réservoir et disposé de façon que son arbre d'entraînement (64) soit dirigé vers le bas.

16. Epandeur centrifuge à deux disques selon l'une quelconque des revendications 13 à 15, **caractérisé en ce que** les disques éjecteurs (4) sont disposés sur une console (60) s'étendant transversalement et entraînés par des moteurs hydrauliques (61) fixés sur la console, et **en ce que** l'on ne prévoit qu'un moteur hydraulique pour l'entraînement des agitateurs (8).

17. Epandeur centrifuge à deux disques selon l'une quelconque des revendications 11 à 16, **caractérisé en ce qu'**un limiteur de charge pour chaque agitateur est disposé dans la chaîne cinématique (10).

18. Epandeur centrifuge à deux disques selon l'une quelconque des revendications 1 à 17, **caractérisé en ce que** les bielles de traction ou de poussée (33) sont coudées et font office simultanément de limiteurs de charge.

19. Epandeur centrifuge à deux disques selon l'une quelconque des revendications 1 à 18, **caractérisé en ce que** l'agitateur (8) présente des doigts agitateurs (42) qui ne parcourent que le diamètre de l'ouverture d'évacuation (39) correspondant aux petites quantités de dosage.

20. Epandeur centrifuge à deux disques selon l'une quelconque des revendications 1 à 19, **caractérisé en ce que** les doigts agitateurs (42) s'étendent de manière plane au-dessus du fond (3) du réservoir (1) de produit à épandre.

21. Epandeur centrifuge à deux disques selon l'une quelconque des revendications 1 à 20, **caractérisé en ce que** pour déplacer le point d'alimentation du produit à épandre sur le disque éjecteur (4) chaque dispositif de dosage est monté pivotant sur la partie inférieure (2) en forme de trémie autour de l'axe (9) de l'agitateur (8).

22. Epandeur centrifuge à deux disques selon l'une quelconque des revendications 1 à 21, **caractérisé en ce que** l'élément de transmission (15,32,34,38) pénétrant dans l'espace situé entre le fond du réservoir (1) et le disque éjecteur (4) laisse libre l'espace situé sous l'ouverture de dosage (39) sur la totalité de l'angle de rotation du fond pour le déplacement du point d'alimentation.
